## Europäisches Patentamt
## European Patent Office
## Office européen des brevets

(19)

(11) Numéro de publication: **0 252 851**
**B1**

(12) **FASCICULE DE BREVET EUROPEEN**

(45) Date de publication du fascicule du brevet: **09.05.90**

(51) Int. Cl.⁵: **B 62 B 1/12, A 63 B 55/08**

(21) Numéro de dépôt: **87401623.1**

(22) Date de dépôt: **09.07.87**

(54) **Chariot pliable, destiné en particulier au transport d'un sac recevant des clubs de golf.**

(30) Priorité: **11.07.86 FR 8610169**

(43) Date de publication de la demande:
**13.01.88 Bulletin 88/02**

(45) Mention de la délivrance du brevet:
**09.05.90 Bulletin 90/19**

(84) Etats contractants désignés:
**BE DE ES FR GB IT NL SE**

(56) Documents cités:
**EP-A-0 009 333
EP-A-0 087 200
FR-A-2 491 420
FR-A-2 575 430
US-A-2 714 012**

(73) Titulaire: **Raguet, François-Xavier
La Neuville aux Haies Hautes-Rivières
F-08800 Montherme (FR)**
(73) Titulaire: **Raguet, Emmanuel
70, rue de la Pompe
F-75116 Paris (FR)**

(72) Inventeur: **Raguet, François-Xavier
La Neuville aux Haies Hautes-Rivières
F-08800 Montherme (FR)**
Inventeur: **Raguet, Emmanuel
70, rue de la Pompe
F-75116 Paris (FR)**

(74) Mandataire: **Martin, Jean-Jacques et al
Cabinet REGIMBEAU 26, Avenue Kléber
F-75116 Paris (FR)**

Courier Press, Leamington Spa, England.

## Description

La présente invention concerne un chariot pliable, notamment un chariot destiné au transport de sacs recevant des clubs de golf. L'invention n'est cependant pas limitée à ce type d'objets transportés, et pourrait par exemple concerner le transport de planches à voile.

Lorsque le transport de tels objets est réalisé à l'aide de dispositifs ou chariots non repliables, ces derniers ont pour inconvénient majeur de ne pas pouvoir être aisément transportés dans un véhicule de tourisme en même temps que les objets auxquels ils sont associés.

C'est dans ce but qu'ont été proposés différents chariots de transport repliables, dont l'encombrement peut être notablement réduit lorsqu'ils sont transportés ou stockés en attente d'une utilisation.

Le document FR-A-2 575 430 décrit un chariot individuel repliable, notamment destiné au transport des clubs de golf. Ce chariot est apte à prendre une première position ou position replée, dans laquelle il occupe un encombrenent latéral minimum, et une seconde position ou position déployée de service, dans laquelle il présente une rigidité satisfaisante permettant le transport de clubs de golf. Plus spécifiquement, ce chariot comporte un bâti formé d'un corps central à la base duquel sont articulés deux demi-essieux et une béquille porte-sac. En position déployée, les demi-essieux et la béquille sont dans un même plan horizontal, le corps central étant perpendiculaire à ce plan. Le pliage est effectué grâce à un curseur coulissant sur le corps central, curseur auquel sont reliés les demiessieux et la béquille par l'intermédiaire de biellettes: il faut donc d'abord replier chacune des roues sous le demi-essieu associé, puis replier alors l'ensemble mobile sur le corps central.

Les chariots repliables de ce type présentent de nombreux inconvénients. Tout d'abord, la présence nécessaire du curseur implique un risque de coincement gênant, voire susceptible d'empêcher le repilage normal du chariot. De plus, les axes des roues sont articulés sur les demi-essieux, de façon à pouvoir effacer les roues, ceci pour obtenir un encombrement latéral minimum : outre la complication des opérations qui en resulte, cette articulation represente une faiblesse importante au niveau de la rigidité du chariot en service, et oblige donc à prévoir des moyens de verrouillage supplémentaires. Enfin, la disposition du chariot en position déployée implique d'une part une garde au sol extrêmement faible (environ un rayon de roue), ce qui est défavorable pour une utilisation sur des terrains accidentés, et d'autre part une position très basse du centre de gravité, lequel est relativement éloigné du sac transporté, ce qui est défavorable au niveau de l'équilibre et du confort d'utilisation.

Le document FR-A-2 491 420 décrit par ailleurs un autre type de chariot individuel repliable. Ce chariot comporte un bâti formé d'un montant central, d'orientation générale verticale sur lequel sont montés au moins deux et de préférence trois piètements repliables contre ce bâti et déployable radialement: chaque piètement est à cet effet articulé par une extrémité sur un support mobile monté à coulissement sur le bâti et est également articulé par une biellette sur la base de ce bâti. Un tel chariot comporte, en outre, un levier articulé sur le bâti dans la partie supérieure de ce dernier et apte à provoquer par l'intermédiaire d'au moins une bielle, le coulissement du support mobile pour amener les piètements de leur position repliée à leur position déployée et réciproquement.

Les chariots repliables du type de celui qui est décrit dans FR-A-2 491 420 présentent un certain nombre d'inconvénients dûs à leur conception même, en particulier un nombre important de pièces en mouvement les unes par rapport aux autres et commandées par une seule pièce, ce qui entraîne fatalement des difficultés de manoeuvre par grippage des différentes articulations. De plus, l'encombrement longitudinal du chariot, en position repliée, reste relativement important.

Un autre type de chariot individuel pliable a également été proposé, selon lequel le montant central est en partie télescopique, comme celui décrit dans le document EP-A-0 009 333.

Ce chariot comporte un montant central rigide, muni de moyens classiques pour fixer un sac de golf, et sur lequel sont articulés deux piètements latéraux. Une extension du montant central, montée coulissante sur celui-ci, permet le montage de biellettes reliant ladite extension aux piètements latéraux, et lesdits piètements latéraux entre eux: on procède ainsi au repliage du chariot en rentrant l'extension télescopique à la façon d'une tige de piston, ce qui ramène les deux piètements latéraux contre le montant central.

Là encore, on retrouve des inconvénients déjà relevés, au niveau de la complexité de la structure, du risque de coincement au repliage, et de l'encombrement encore relativement important, tant longitudinalement que latéralement.

L'état de la technique est enfin illustré par les documents US-A-2 714 012 et EP-A-0 087 200, dans lesquels sont décrits des chariots pliables.

Plus précisément, le document US-A-2 714 012 décrit un chariot pliable, destiné en particulier au transport d'un sac recevant des clubs de golf, pouvant prendre une première position ou position repliée dans laquelle ledit chariot occupe un encombrement minimum, et une seconde position ou position déployée de service, ledit chariot comprenant un montant central muni de mnoyens de fixation et formant une béquille de repos dont l'extrémité libre peut reposer sur le sol, ainsi que deux piètements latéraux articulés par une de leurs extrémités et munis d'un moyen de roulement à l'autre extrémité, de telle sorte qu'en position déployée ces piètements latéraux ainsi que le montant central soient obliques et que les extrémités libres desdits piètements latéraux et de ladite béquille forment au sol un triangle, conformément au préambule de la revendication 1.

La présente invention a pour but de proposer un chariot pliable du type précité, plus particulièrement destiné au transport de clubs de golf, qui puisse être manoeuvré aisément et durablement, tout en étant de structure simple et d'un prix de revient compétitif, et sans présenter les inconvénients précités.

Un autre but de la présente invention est de réaliser un chariot qui puisse être aisément tiré en position déployée, et transporté en position repliée, position dans laquelle ce chariot occupe un encombrement minimum et est suffisamment léger pour être aisément transporté à la main par l'utilisateur.

Ces buts, ainsi que d'autres qui apparaîtront par la suite, sont atteints par un chariot pliable caractérisé par le fait qu'il comprend, conformément à la partie caractérisante de la revendication I:

deux demi-montants articulés par une de leurs extrémités sur une pièce d'articulation commune, de telle sorte qu'en position déployée ces deux demi-montants soient sensiblement dans le prolongement l'un de l'autre pour constituer le montant central, l'un desdits demi-montants formant la béquille de repos dont l'extrémité libre peut reposer sur le sol, et les deux piètements latéraux étant articulés sur ladite pièce d'articulation;

un ensemble de biellettes, reliant chaque demi-montant d'une part, et chaque piètement latéral d'autre part, à un barreau central de liaison, de telle sorte qu'en position repliée lesdits piètements latéraux et lesdits demi-montants soient sensiblement parallèles les uns aux autres et situés d'un même côté par rapport à ladite pièce d'articulation.

De préférence, le chariot pliable comprend des moyens de blocage pour les demi-montants du montant central, lesdits moyens étant portés par la pièce d'articulation; en particulier, ces moyens de blocage sont essentiellement constitués par un sabot d'appui pouvant pivoter autour d'une vis de serrage, de façon à pouvoir prendre une première position correspondant à la position repliée du chariot, dans laquelle ledit sabot d'appui repose entièrement sur la pièce d'articulation pour permettre une libre articulation des demi-montants, et une seconde position correspondant à la position déployée du chariot, dans laquelle ledit sabot d'appui contacte les extrémités des deux demi-montants du montant central articulés sur ladite pièce d'articulation.

Avantageusement, les piètements latéraux sont chacun constitués par deux longerons disposés l'un au-dessus de l'autre, chaque longeron inférieur étant relié au barreau central de liaison par une biellette associée; en particulier, la paire de longerons d'un même piètement latéral est articulée sur la pièce d'articulation d'une part, et sur un étrier support associé à l'axe du moyen de roulement d'autre part, de telle sorte que les axes desdits moyens de roulement conservent la même direction.

De préférence, le barreau central de liaison est sensiblement vertical lorsque le chariot est en position repliée. Dans un mode de réalisation avantageux, les biellettes articulées sur les piètements latéraux sont reliées au sommet du barreau central de liaison, de façon à être sensiblement dans le prolongement l'une de l'autre en position déployée, et les biellettes articulées sur les demi-montants du montant central sont articulées sur la base du barreau central de liaison et forment entre elles un angle aigu.

Avantageusement, à l'extrémité libre du demi-montant du montant central qui ne forme pas béquille, est articulée une tige munie d'une poignée; en particulier, la tige munie d'une poignée est articulée par une rotule comportant des moyens de blocage pour toutes les positions angulaires relatives entre ladite tige et le demi-montant associé. Il est en outre intéressant que les demi-montants présentent une longueur telle que leur extrémité libre soit, en position repliée, au niveau des bords de roues, pour permettre un appui stable dudit chariot dans cette position.

De préférence, le chariot pliable comporte en outre un moyen de préhension facilitant la prise dudit chariot en position repliée; en particulier, le moyen de préhension est essentiellement constitué par une lanière souple formant poignée, fixée surchaque demi-montant du montant central.

D'autres caractéristiques et avantages de l'invention apparaîtront plus clairement à la lumière de la description qui va suivre et des dessins annexés, concernant un mode de réalisation préférentiel, en référence aux figures où:

la figure 1 est une vue en perspective d'un chariot selon la présente invention, en position déployée;

la figure 2 est une vue en perspective de ce même chariot en position intermédiaire, par exemple en cours de repliement; et

la figure 3 est une vue en perspective de ce même chariot en position repliée.

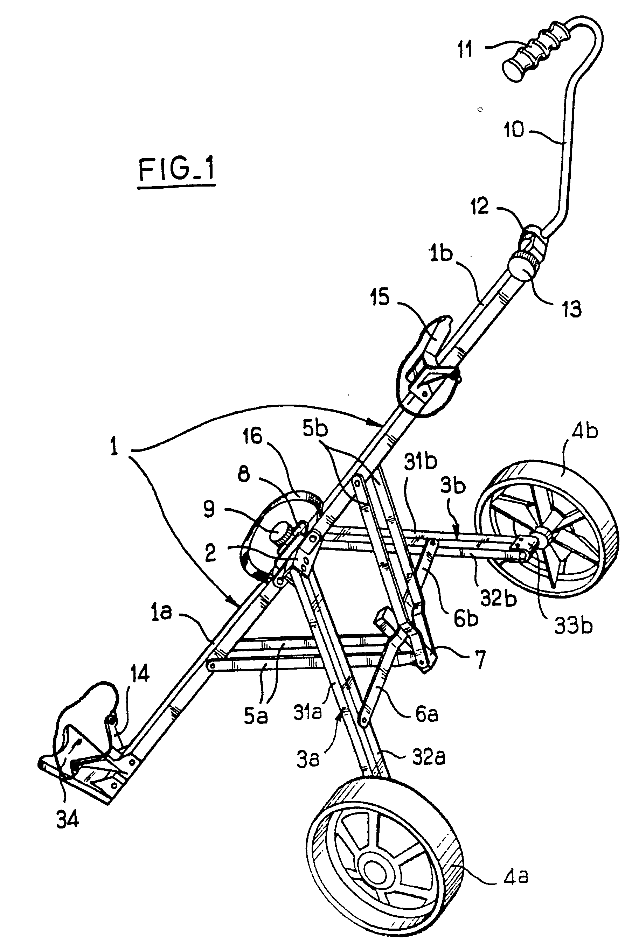

Ainsi qu'on peut notament le voir sur ces figures, un dispositif de transport repliable tel qu'un chariot défini ci-dessus, conprend deux demi-montants 1a et 1b articulés par une de leurs extrémités sur une pièce d'articulation 2, de telle sorte qu'en position déployée (figure 1) ces deux demi-montants 1a et 1b soient sensiblement dans le prolongement l'un de l'autre, constituant ainsi un montant central incliné 1. L'un de ces deux demi-montants, le demi-montant 1a selon le présent exemple de réalisation, forme une béquille de repos dont l'extréité libre peut reposer sur le sol.

Ce chariot comprend égalemment deux piètements latéraux 3a et 3b qui sont obliques lorsque le chariot est en position déployée, et qui sont articulés par une de leurs extrémités sur la pièce d'articulation 2 précitée. Leur autre extrémité est par ailleurs munie d'une roue 4a et 4b, respectivement.

Les extrémités libres du demi-montant 1a et des piètements latéraux 3a et 3b, ces dernières étant munies de roues 4a et 4b, forment au sol, lorsque le chariot est en position déployée, un triangle.

Selon la présente invention, ce chariot comporte également un ensemble de biellettes 5a, 5b et 6a, 6b, chacune reliant un demi-montant ou un piètement oblique à un barreau central de liaison 7.

Afin de bloquer le chariot en position déployée, tel que représenté sur la figure 1, on munit celui-ci d'un moyen de blocage, qui est ici constitué par un sabot d'appui 8 pouvant pivoter autour d'une vis de serrage 9 montée sur la pièce d'articulation 2.

Lorsque le chariot est en position déployée, le sabot 8 appuie directement sur les deux extrémités des demi-montants 1a et 1b articulés sur la pièce d'articulation 2. Comme on le verra par la suite, le sabot mobile 8 peut prendre une deuxième position, après un pivotement d'environ 90°, dans laquelle ledit sabot repose entièrement sur la pièce d'articulation 2, et permet ainsi une libre articulation des demi-montants 1a et 1b.

A l'extrémité libre du demi-montant 1b c'est-à-dire le demi-montant qui ne forme pas béquille, est articulée une tige 10 munie d'une poignée 11. Cette tige 10 est articulée par exemple au moyen d'une rotule 12 sur ce demi-montant 1b. La rotule 12 est, selon cet exemple de réalisation, constituée par deux demi-sphères: l'une 12a étant solidaire du demi-montant 1b, l'autre 12b solidaire de la tige 10. Les parties en regard de ces demi-spheres 12a et 12b sont de préférence crénelées, de façon à pouvoir être bloquées en rotation par un bouton de serrage 13, de telle sorte que la tige 10 puisse être inclinée par rapport au montant central 1 selon le souhait de l'utilisateur.

Sur le montant central 1 sont disposés au moins deux étriers porte-sac 14 et 15, de conception classique, permettant la fixation par exemple d'un sac de golf, ainsi que son maintien en appui sur une fourchette 34, montée également pivotante sur le demi-montant 1a, en dessous de l'étrier inférieur 14.

Lorsque le chariot selon la présente invention est en position déployée, comme représenté à la figure 1, les deux biellettes 6a et 6b, qui sont articulées sur les piètements latéraux 3a et 3b, sont reliées au sommet du barreau central de liaison 7 qui est alors sensiblement vertical: ces deux biellettes sont dans ce cas sensiblement dans le prolongement l'une de l'autre. Quant aux biellettes 5a et 5b qui sont articulées sur les demi-montants 1a et 1b respectivement du montant central 1, elles sont articulées sur la base de ce barreau central de liaison 7, et forment entre elles un angle aigu.

Lorsque l'on veut replier un tel chariot, l'utilisateur commence par débloquer les deux demi-sphères 12a et 12b de façon à replier la tige 10 le long du demi-montant 1b: il bloque alors à nouveau la rotule 12 dans cette position. Puis, en desserrant la vis de serrage 9, il libère l'appui exercé sur le montant central 1, en faisant pivoter le sabot d'appui 8 pour lui faire prendre une position sensiblement perpendiculaire à celle que ce sabot d'appui avait en position de blocage, et, en revissant la vis de serrage 9, l'utilisateur bloque à nouveau, dans cette position le sabot d'appui 8 sur la pièce d'articulation 2.

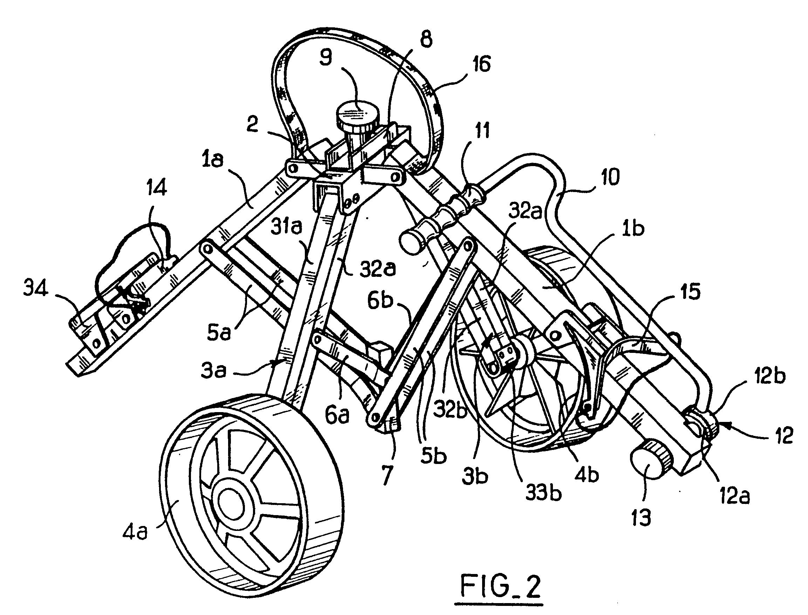

En appuyant simultanément sur les deux demi-montants 1a et 1b constituant le montant central 1, l'utilisateur entraîne non seulement le repliement de ces deux demi-montant, mais également celui des deux piètements latéraux 3a et 3b du fait de l'action des biellettes 5a et 5b sur le barreau central de liaison 7. Sur la figure 2 est représentée une position intermédiaire du chariot au cours de son repliement.

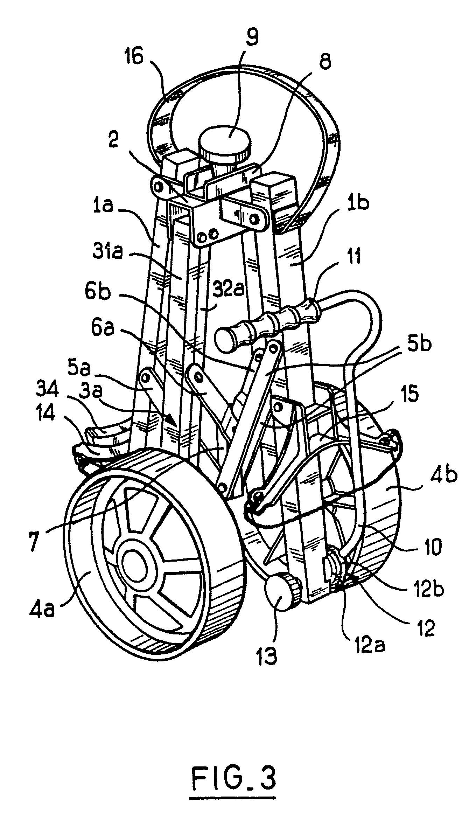

Une fois repliés, les demi-montants 1a et 1b ainsi que les piètements latéraux 3a et 3b sont sensiblement parallèles entre eux et situés d'un même côté par rapport à la pièce d'articulation 2, ainsi que cela est visible sur la figure 3.

Afin de pouvoir transporter aisément ce chariot replié, ce dernier comporte avantageusement une lanière souple formant poignée 16, dont chaque extrémité est solidaire d'un demi-montant du montant central 1.

Le déploiement du chariot replié se fait en sens inverse, en ramenant tout simplement les deux demi-montants la et 1b dans le prolongement l'un de l'autre.

Il est par ailleurs avantageux que chaque piètement latéral 3a et 3b soit constitué par deux longerons qui sont disposés l'un au-dessus de l'autre, respectivement 31a et 32a, 31b et 32b, de telle sorte que seuls les longerons inférieurs 32a, 32b soient reliés au barreau central de liaison 7 par la biellette correspondante 6a ou 6b. Ces longerons sont parallèles, et sont articulés à chacune de leurs extrémités, respectivement sur la pièce d'articulation 2 et sur un étrier 33a ou 33b, servant au support de l'axe de la roue associée 4a ou 4b (seul l'étrier 33b est visible ici). L'ensemble des deux longerons, associes a une roue, et les parties de la piece de liaison 2 et du support d'axe de roue, comprises entre les articulations, forme un parallélogramme déformable, de sorte que l'axe de la roue 4a, ou 4b, lors du pliage ou du dépliage, conserve la même direction par rapport à la pièce d'articulation 2: ceci est important non seulement en position de service, pour avoir des axes de roues horizontaux, mais aussi en position repliée, pour avoir un encombrement latéral très réduit, et subsidiairement un bon appui du chariot sur ses roues et les extrémités libres de ses demi-montants.

Pour ce qui est des biellettes 5a et 5b articulées sur les demi-montants 1a et 1b respectivement, elles peuvent être avantageusement constituées chacune par une paire formant un étrier.

Ainsi qu'on aura pu le remarquer, le maniement d'un tel chariot est aisé. De plus, en position repliée il est d'un transport facile et d'un encombrement minimum. On peut également noter que l'inclinaison du montant central permet un déplacement facile du chariot, lorsqu'il comporte un sac de golf, avec une garde au sol relativement importante.

Enfin, la structure articulée du montant central évite tout risque de coincement lors des opérations de repliage du chariot.

## Revendications

1. Chariot pliable, destiné en particulier au transport d'un sac recevant des clubs de golf, pouvant prendre une première position ou position repliée dans laquelle ledit chariot occupe un encombrement minimum, et une seconde position ou position déployée de service, ledit chariot comprenant un montant central muni de moyens de fixation et formant une béquille de repos dont l'extrémité libre peut reposer sur le sol, ainsi que deux piètements latéraux articulés par une de leurs extrémités et munis d'un moyen de roulement à l'autre extrémité, de telle sorte qu'en position déployée ces piètements latéraux ainsi que le montant central soient obliques et que les extrémités libres desdits piètements latéraux et de ladite béquille forment au sol un triangle, caractérisé par le fait qu'il comprend:

deux demi-montants (1a, 1b) articulés par une de leurs extrémités sur une pièce d'articulation commune (2), de telle sorte qu'en position déployée ces deux demi-montants (1a, 1b) soient sensiblement dans le prolongement l'un de l'autre pour constituer le montant central (1), l'un (1a) desdits demi-montants formant la béquille de repos dont l'extrémité libre peut reposer sur le sol, et les deux piètements latéraux (3a, 3b) étant articulés sur ladite pièce d'articulation (2);

un ensemble de biellettes (5a et 5b, 6a et 6b), reliant chaque demi-montant (1a, 1b) d'une part, et chaque piètement latéral (3a, 3b) d'autre part, à un barreau central de liaison (7), de telle sorte qu'en position repliée lesdits piètements latéraux et lesdits demi-montants soient sensiblement parallèles les uns aux autres et situés d'un même côté par rapport à ladite pièce d'articulation (2).

2. Chariot pliable selon la revendication 1, caractérisé par le fait qu'il comprend des moyens de blocage (8, 9) pour les demimontants (1a, 1b) du montant central (1), lesdits moyens étant portés par la pièce d'articulation (2).

3. Chariot pliable selon la revendication 2, caractérisé par le fait que les moyens de blocage sont essentiellement constitués par un sabot d'appui (8) pouvant pivoter autour d'une vis de serrage (9), de façon à pouvoir prendre une première position correspondant à la position repliée du chariot, dans laquelle ledit sabot d'appui repose entièrement sur la pièce d'articulation (2) pour permettre une libre articulation des demi-montants (1a, 1b), et une seconde position correspondant à la position déployée du chariot, dans laquelle ledit sabot d'appui contacte les extrémités des deux demi-montants (1a, 1b) du montant central (1) articulés sur ladite pièce d'articulation (2).

4. Chariot pliable selon l'une des revendications 1 à 3, caractérisé par le fait que les piètements latéraux (3a, 3b) sont chacun constitués par deux longerons (31a et 32a, 31b et 32b) disposés l'un au-dessus de l'autre, chaque longeron inférieur (32a, 32b) étant relié au barreau central (7) de liaison par une biellette associée (6a, 6b).

5. Chariot pliable selon la revendication 4, caractérisé par le fait que la paire de longerons (31a, 32a; 31b, 32b) d'un même piètement latéral est articulée sur la pièce d'articulation (2) d'une part, et sur un étrier support (33a; 33b) associé à l'axe du moyen de roulement (4a, 4b) d'autre part, de telle sorte que les axes desdits moyens de roulement conservent la même direction.

6. Chariot pliable selon l'une des revendications 1 à 5, caractérisé par le fait que le barreau central de liaison (7) est sensiblement vertical lorsque le chariot est en position repliée.

7. Chariot pliable selon l'une des revendications 1 à 6, caractérisé par le fait que les biellettes (6a, 6b) articulées sur les piètements latéraux (3a, 3b) sont reliées au sommet du barreau central de liaison (7), de façon à être sensiblement dans le prolongement l'une de l'autre en position déployée.

8. Chariot pliable selon l'une des revendications 1 à 7, caractérisé par le fait que les biellettes (5a, 5b) articulées sur les demi-montants (1a, 1b) du montant central (1) sont articulées sur la base du barreau central de liaison (7) et forment entre elles un angle aigu.

9. Chariot pliable selon l'une des revendications 1 à 8, caractérisé par le fait qu'à l'extrémité libre du demi-montant (1b) du montant central (1) qui ne forme pas béquille, est articulée une tige (10) munie d'une poignée (11).

10. Chariot pliable selon la revendication 9, caractérisé par le fait que la tige (10) munie d'une poignée (11) est articulée par une rotule (12) comportant des moyens de blocage pour toutes les positions angulaires relatives entre ladite tige et le demi-montant (1b) associé.

11. Chariot pliable selon l'une des revendications 9 et 10, caractérisé par le fait que les demi-montants (1a, 1b) présentent une longueur telle que leur extrémité libre soit, en position repliée, au niveau des bords de roues pour permettre un appui stable dudit chariot dans cette position.

12. Chariot pliable selon l'une des revendications 1 à 11, caractérisé par le fait qu'il comporte en outre un moyen de préhension (16) facilitant la prise dudit chariot en position repliée.

13. Chariot pliable selon la revendication 12, caractérisé par le fait que le moyen de préhension est essentiellement constitué par une lanière souple formant poignée (16), fixée sur chaque demi-montant (1a, 1b) du montant central (1).

## Patentansprüche

1. Zusammenlegbares Fahrgestell, bestimmt insbesondere für den Transport einer Tasche, die Golfschläger enthält, das eine erste Stellung oder zusammengelegte Stellung einnehmen kann, in der das Fahrgestell einen minimalen Platzbedarf benötigt, und einer zweiten Stellung oder entfalteten Dienststellung, wobei das Fahrgestell eine zentrale Stütze, die mit Befestigungseinrichtungen versehen ist und eine Lagerstütze bildet, deren freies Ende auf dem Boden ruhen kann, sowie zwei seitliche Gestelle aufweist, die an einem ihrer Enden angelenkt sind und mit einer Rolleinrichtung an dem anderen Ende versehen sind, derart, daß in der entfalteten Stellung diese seitlichen Gestelle sowie die zentrale Stütze schräggestellt sind, und daß die freien Enden der seitlichen Gestelle und der Lagerstütze am Boden ein Dreieck bilden, dadurch gekennzeichnet, daß es aufweist:

zwei Halbstützen (1a, 1b), die an einem ihrer Enden auf einem gemeinsamen Gelenkstück (2) angelenkt sind, derart, daß in entfalteter Stellung die beiden Halbstützen (1a—1b) im wesentlichen in der Verlängerung die eine zur anderen angeordnet sind, um die zentrale Stütze (1) zu bilden, wobei eine (1a) der Halbstützen die Lagerstütze bildet, deren freies Ende auf dem Boden ruhen kann, und die beiden seitlichen Gestelle (3a, 3b) auf dem Gelenkstück (2) angelenkt sind;

eine Anordnung von Schwingarmen (5a und 5b, 6a und 6b), die jede Halbstütze (1a, 1b) einerseits und jedes seitliche Gestell (3a, 3b) andererseits mit einem zentralen Verbindungsbalken (7) derart verbinden, daß in der zusammengelegten Stellung die seitlichen Gestelle und die Halbstützen im wesentlichen parallel zueinander und auf derselben Seite bezüglich des Gelenkstücks (2) angeordnet sind.

2. Zusammenlegbares Fahrgestell nach Anspruch 1, dadurch gekennzeichnet, daß die Blockierungseinrichtungen (8, 9) für die Halbstützen (1a, 1b) der zentralen Stütze (1) aufweist, wobei die genannten Einrichtungen von dem Gelenkstück (2) getragen werden.

3. Zusammenlegbares Fahrgestell nach Anspruch 2, dadurch gekennzeichnet, daß die Blockierungseinrichtungen im wesentlichen durch einen Lagerbock (8) gebildet sind, der um eine Klemmschraube (9) drehen kann, derart, daß er eine erste Stellung entsprechend der zusammengelegten Stellung des Fahrgestells, in der der Lagerbock vollständig auf dem Gelenkstück (2) ruht, um eine freie Bewegung der Halbstützen (1a, 1b) zu erlauben, und eine zweite Stellung einnehmen kann, die der entfalteten Stellung des Fahrgestells entspricht, in der der Lagerbock die Enden der beiden Halbstützen (1a, 1b) der zentralen Stütze (1) berührt, die sich auf dem Gelenkstück (2) dreht.

4. Zusammenlegbares Fahrgestell nach einem der Ansprüche 1 bis 3, dadurch gekennzeichnet, daß die seitlichen Gestelle (3a, 3b) jeweils durch zwei Längsträger (31a und 32a, 31b und 32b) gebildet sind, die übereinander angeordnet sind, wobei jeder untere Längsträger (32a, 32b) mit dem zentralen Verbindungsbalken (7) durch einen zugehörigen Schwingarm (6a, 6b) verbunden ist.

5. Zusammelegbares Fahrgestell nach Anspruch 4, dadurch gekennzeichnet, daß das Paar der Längsträger (31a, 32a; 31b, 32b) desselben seitlichen Fahrgestells auf dem Gelenkstrück (2) einerseits und an einem Stützbügel (33a; 33b) andererseits angelenkt sind, der mit der Achse der Rolleinrichtung (4a; 4b) verbunden ist, derart, daß die Achsen der genannten Rolleinrichtungen dieselbe Richtung beibehalten.

6. Zusammenlegbares Fahrgestell nach einem der Ansprüche 1 bis 5, dadurch gekennzeichnet, daß der zentrale Verbindungsbalken (7) im wesentlichen vertikal ist, wenn das Fahrgestell sich in gefalteter bzw. zusammengelegter Stellung befindet.

7. Zusammenlegbares Fahrgestell nach einem der Ansprüche 1 bis 6, dadurch gekennzeichnet, daß die Schwingarme (6a, 6b), die an den seitlichen Gestellen (3a, 3b) angelenkt sind, an der Spitze des zentralen Verbindungsbalkens (7) verbunden sind, derart, daß sie im wesentlichen in Verlängerung zueinander in entfalteter Position angeordnet sind.

8. Zusammelegbares Fahrgestell nach einem der Ansprüche 1 bis 7, dadurch gekennzeichnet, daß die Schwingarme (5a, 5b), die an den Halbstützen (1a, 1b) der zentralen Stütze (1) angelenkt sind, an der Basis des zentralen Verbindungsbalkens (7) angelenkt sind, und untereinander einen spitzen Winkel bilden.

9. Zusammenlegbares Fahrgestell nach einem der Ansprüche 1 bis 8, dadurch gekennzeichnet, daß am freien Ende der Halbstütze (1b) der zentralen Stütze (1), die nicht die Lagerstütze bildet, eine Stange (10) angelenkt ist, die mit einem Handgriff (11) versehen ist.

10. Zusammenlegbares Fahrgestell nach Anspruch 9, dadurch gekennzeichnet, daß die Stange (10), die mit einem Handgriff (11) versehen ist, durch ein Gelenk (12) drehbar ist, das Blockierungseinrichtungen für alle relativen Winkelstellungen zwischen der Stange und der zugehörigen Halbstütze (1b) aufweist.

11. Zusammenlegbares Fahrgestell nach einem der Ansprüche 9 und 10, dadurch gekennzeichnet, daß die Halbstützen (1a, 1b) eine Länge aufweisen, derart, daß ihr freies Ende in zusammengelegter Stellung auf der Höhe der Ränder der Räder liegt, um eine stabile Auflage des Fahrgestells in dieser Position zu ermöglichen.

12. Zusammenlegbares Fahrgestell nach einem der Ansprüche 1 bis 11, dadurch gekennzeichnet, daß es weiterhin eine Griffeinrichtung (16) aufweist, die die Aufnahme des Fahrgestells in zusammengelegter Stellung erleichtert.

13. Zusammenlegbares Fahrgestell nach Anspruch 12, dadurch gekennzeichnet, daß die Aufnahmeeinrichtungen im wesentlichen durch einen einen Handgriff (16) bildenden Riemen gebildet ist, der auf jeder Halbstütze (1a, 1b) der zentralen Stütze (1) befestigt ist.

**Claims**

1. A collapsible cart intended in particular for carrying a load such as a golf bag and clubs, the cart being capable of taking up a first, collapsed position in which it is compact, and a second, deployed position, the said cart comprising a central riser provided with fixing means and forming a strut whose free end may stand on the ground, together with two side legs each hinged at one of its free ends and each having its other free end provided with running means, such that in the deployed position said side legs slope obliquely as does the central riser, with the free ends of the strut and of said side legs forming a triangle on the ground, characterized in that it further comprises:

two half-risers (1a, 1b) each hinged at one end to a common hinge piece (2) such that in the deployed position said two half-risers (1a, 1b) are substantially in alignment and constitute the central riser (1), with one (1a) of said half-risers forming the strut whose free end may stand on the ground, and the two side legs (3a, 3b) being each hinged to said hinge piece (2);

a set of links (5a and 5b, 6a and 6b) connecting each half-riser (1a, 1b) and each side leg (3a, 3b) to a central interconnecting post (7) such that in the collapsed position said side legs and said half-risers are substantially parallel to one another and all of them are situated on the same side of said hinge piece (2).

2. A collapsible cart according to claim 1, characterized in that it includes locking means (8, 9) for locking together the central riser half-risers (1a, 1b), said locking means being mounted on the hinge piece (2).

3. A collapsible cart according to claim 2, characterized in that the locking means are essentially constituted by a pressure plate (8) capable of rotating about a clamping screw (9) so as to take up a first position corresponding to the collapsed position of the cart in which said pressure plate rests entirely against the hinge piece (2) in order to leave the half-risers (1a, 1b) free to pivot, and a second position corresponding to the deployed position of the cart in which said pressure plate comes into contact with the ends of the two half-risers (1a, 1b) of the central riser (1) where they are hinged to said hinge piece (2).

4. A collapsible cart according to any one of claims 1 to 3, characterized in that each of the side legs (3a, 3b) is constituted by a pair of bars (31a and 32a, 31b and 32b) disposed one above the other, with each bottom bar (32a, 32b) being connected to the central interconnecting post (7) by an associated link (6a, 6b).

5. A collapsible cart according to claim 4, characterized in that the pair of bars (31a, 32a; 31b, 32b) of each side leg is hinged at one end to the hinge piece (2) and at the other end to a support bracket (33a; 33b) associated with the shaft of the running means (4a; 4b) in such a manner as to ensure that the shafts of said running means remain in the same direction.

6. A collapsible cart according to any one of claims 1 to 5, characterized in that the central interconnecting post (7) is substantially vertical when the cart is in the collapsed position.

7. A collapsible cart according to any one of claims 1 to 6, characterized in that the links (6a, 6b) hinged to the side legs (3a, 3b) are connected to the top of the central interconnecting post (7) so as to be substantially in alignment with each other in the deployed position.

8. A collapsible cart according to any one of claims 1 to 7, characterized in that the links (5a, 5b) hinged to the central riser half-risers (1a, 1b) are hinged to the base of the central interconnecting post (7) and are at an acute angle to each other.

9. A collapsible cart according to any one of claims 1 to 8, characterized in that the free end of that one (1b) of the central riser half-risers which does not constitute the strut, is hinged to a rod (10) fitted with a handle (11).

10. A collapsible cart according to claim 9, characterized in that the rod (10) fitted with a handle (11) is hinged by means of a knuckle joint (12) including locking means for any relative angular position between said rod and the associated half-riser (1b).

11. A collapsible cart according to claim 9 or 10, characterized in that the half-risers (1a, 1b) are of such a length that, when in the collapsed position, their free ends are level with the edges of the wheels, thereby enabling the cart to stand securely in said collapsed position.

12. A collapsible cart according to any one of claims 1 to 11, characterized in that it further includes grasping means (16) for faciliting handling said cart when in the collapsed position.

13. A collapsible cart according to claim 12, characterized in that the grasping means is essentially constituted by a handle-forming flexible strap (16) having each of its ends fixed to a corresponding one of the half-risers (1a, 1b) of the central riser (1).

FIG.1

FIG. 2

EP 0 252 851 B1

FIG.3